# EUROPEAN PATENT SPECIFICATION

(11) **EP 1 859 602 B1**
(45) Date of publication and mention of the grant of the patent: **07.07.2010**
(21) Application number: 05824597.8
(22) Date of filing: 31.10.2005
(51) Int. Cl.: H04L 29/08

(54) **DISTRIBUTED STORING OF NETWORK POSITION INFORMATION FOR NODES**
VERTEILTES SPEICHERN VON NETZWERKPOSITIONSINFORMATIONEN FÜR KNOTEN
STOCKAGE REPARTI D'INFORMATIONS DE POSITION DE RESEAU POUR DES NOEUDS

(30) Priority: 16.03.2005 US 82135
(43) Date of publication of application: 28.11.2007
(73) Proprietor: HEWLETT-PACKARD DEVELOPMENT COMPANY, L.P., Houston, TX 77070 (US)
(72) Inventor: SHARMA, Puneet, Hewlett-Packard Company, Palo Alto, California 94304 (US); FONSECA, Rodrigo, Hewlett-Packard Company, Palo Alto, California 94304 (US); BANERJEE, Sujata, Hewlett-Packard Company, Palo Alto, California 94304 (US); LEE, Sung-ju, Hewlett-Packard Company, Palo Alto, California 94304 (US); BASU, Sujoy, Hewlett-packard Company, Palo Alto, California 94304 (US)
(74) Representative: Schoppe, Fritz
(86) International application number: PCT/US2005/039924
(87) International publication number: WO 2006/101534

(56) References cited:
- US-A1- 2003 225 893
- US-B2- 6 522 883
- JINYANG LI; JANNOTTI J; DE COUTO D S J; KARGER D R; MORRIS R: "A scalable location service for geographic ad hoc routing" PROCEEDINGS OF MOBICOM 2000. SIXTH ANNUAL INTERNATIONAL CONFERENCE ON MOBILE COMPUTING AND NETWORKING,, August 2000 (2000-08), pages 45-74, XP002372277 Boston, MA
- ZHICHEN XU ET AL: "Building topology-aware overlays using global soft-state" PROCEEDINGS OF THE 23RD. INTERNATIONAL CONFERENCE ON DISTRIBUTED COMPUTING SYSTEMS. ICDCS 2003. PROVIDENCE, RI, MAY 19 - 22, 2003, INTERNATIONAL CONFERENCE ON DISTRIBUTED COMPUTING SYSTEMS, LOS ALAMITOS, CA : IEEE COMP. SOC, US, vol. CONF. 23, 19 May 2003 (2003-05-19), pages 500-508, XP010642320 ISBN: 0-7695-1920-2
- MARKOULIDAKIS J G ET AL: "Data transfer schemes for 3G mobile telecommunication systems" COMMUNICATIONS AND VEHICULAR TECHNOLOGY, 2000. SCVT-200. SYMPOSIUM ON OCT 19, 2000, PISCATAWAY, NJ, USA,IEEE, 2000, pages 34-41, XP010542730 ISBN: 0-7803-6684-0

## Description

### TECHNICAL FIELD

This invention relates generally to networks. More particularly, the invention relates to storing network position information for nodes in a network.

### BACKGROUND

Many systems use a centralized database to store information. A centralized database has the advantage of storing a complete set of the stored information at one location. Thus, queries executed on the centralized database produce complete search results in the sense that all the information available in the database is searched to produce the best results. However, there are some disadvantages to a centralized database. First, the centralized database is a single point of failure. Second, if the centralized database stores information from many sources transmitting information to the centralized database via a network and the sources periodically transmit updates to the centralized database, there may be a limit to the network traffic that such updates can impose. For example, bandwidth limitations may limit the frequency of updates or there may be a limit to the number of sources that can store information in the centralized database. Lastly, a centralized database typically cannot be located in close proximity to many of the sources or cannot be located in close proximity to many systems generating queries for the centralized database via the network. Thus, there may be higher latencies for some systems accessing the centralized database. Replicating the centralized database may increase the availability and potentially decrease the average latency for querying, while still providing the same answers as the centralized system, but it aggravates the network

US 6,522,883 B2 relates to telecommunications service delivery system for routing calls to and from a given user via the networks in accordance with a routing decision logic and a geographical and terminal storage. The storage takes the form of a distributed database and receives user position information and terminal information via signaling channels of the networks and supplies this information on request to the routing logic. The routing logic sets up the switches through the networks to route the message as desired to or from the given user. A given regional database will contain a user position field for each of the users within its region, comprising the union of all the users in all the localities making up the region. Each user field simply comprises a pointer to the local database in which the position record for that user is stored (and within the locality of which that user is last detected). Likewise, in the home database station for the user concerned, a further user field is present for that user, containing a pointer to the identity of the regional database within which a field for that user is stored. Thus, each user record is duplicated n times, where there are n layers present in the position tracking distributed database. When it is desired to determine a user's location, his home database is accessed (based on his dial number, his international mobile subscriber identity, network user identity or some other identifier associated with the user). Then, the region database is determined from the user field within the home database, and this regional database is accessed. If there are further intermediate layers in the hierarchical database, the above steps are repeated as necessary to move down through the layers of the hierarchy. Ultimately, in a regional database the identity of the local database associated with the locality in which the user is presently to be found is read, and the local database is interrogated via an interrogation signal, and replies with a message including the current user position, and the terminal records of all nearby terminals, including the positions and technical characteristics thereof.

US 2003/0225893 A1 relates to locating devices in a data network, wherein this system associates physical locations with network linked devices in a network to which such devices are connected. This system provides location information for particular devices to the network devices and management. The locating system operates and provides network based services to users according to locations of devices that use or are part of the network associated with the system. The system includes an infrastructure that includes multiple switching devices, some of which are connected to connection points of the infrastructure. The System employs both hardware and software (e.g., an application executing on server) to provide location-aware services described below. A location of a device can relate to the physical location of the device, which can be characterized in a variety of ways including as grid or map coordinates (e.g., latitude, longitude, and elevation), a geographic region, or in terms of building structures, such as coordinates on a particular floor in a building or a room number in a building. Some of the devices internal and external to infrastructure include a location module.

XP-002372277 (Jinyang et al. "A Scalable Location Service for Geographic Ad Hoc Routing") relates to a scalable location service for geographic ad hoc routing. The grid location service (GLS) is based on the idea that a mobile node maintains its current location in a number of location servers distributed throughout the network. These location servers are not especially designated, wherein each node acts as a location server on behalf of some other nodes. The location servers for a node are relatively dense near the node but sparse further from the node. GLS is decentralized and runs on the mobile nodes themselves, requiring no fixed infrastructure. Each mobile node periodically updates its small set of other nodes (its location servers) with its current location. A node sends its position updates to its location servers without knowing the actual identities, assisted by a predefined ordering of node identifiers and a predefined geographic hierarchy. Queries for a mobile node's location also use the predefined identifier ordering and spatial hierarchy to find a location server for that node.

### SUMMARY

According to an embodiment, network position information for a node in a network is determined. An infrastructure node in the network is identified for storing the network position information for the node based on a network distance to the infrastructure node.

Claim 1 concerns a method of distributing the storage of network position information. Claim 5 concerns a corresponding system.

### BRIEF DESCRIPTION OF THE DRAWINGS

Various features of the embodiments can be more fully appreciated, as the same become better understood with reference to the following detailed description of the embodiments when considered in connection with the accompanying figures, in which:
Figure 1 illustrates a network including nodes, according to an embodiment;
Figure 2 illustrates storing network position information, according to an embodiment;
Figure 3 illustrates searching a distributed database, according to an embodiment;
Figure 4 illustrates an expanded search of the distributed database, according to an embodiment;
Figure 5 illustrates a distributed hash table overlay network for storing network position information, according to an embodiment;
Figure 6 illustrates network position information in a landmark space, according to an embodiment;
Figure 7 illustrates hashing points in the landmark space to determine corresponding points in a lower-dimensional space, according to an embodiment;
Figures 8A-B illustrate using a space filling curve, according to an embodiment;
Figure 9 illustrates a flow chart of a method for storing network position information, according to an embodiment;
Figure 10 illustrates a flow chart of a method for searching a distributed database, according to an embodiment; and
Figure 11 illustrates a computer system, according to an embodiment.

### DETAILED DESCRIPTION OF THE EMBODIMENTS

For simplicity and illustrative purposes, the principles of the embodiments are described. However, one of ordinary skill in the art would readily recognize that the same principles are equally applicable to, and can be implemented in variations that do not depart from the scope of the embodiments. Moreover, in the following detailed description, references are made to the accompanying figures, which illustrate specific embodiments. Electrical, mechanical, logical and structural changes may be made to the embodiments without departing from the scope of the embodiments.

According to an embodiment, network position information is stored among multiple infrastructure nodes in the network based on network distances. The distributed infrastructure lends itself to scalability as well as providing a self-aware infrastructure that minimizes network traffic and also reduces latency. The distributed infrastructure is also operable to respond to queries. For example, the distributed infrastructure includes a distributed database storing network position information for nodes in a network. The distributed infrastructure is operable to respond to queries, such as "what is the closest node to node A", "what are the k closest nodes to node A", or "give me k nodes closer to

A than latency x". Queries may be executed by infrastructure nodes closest to nodes generating the queries to reduce latency and network traffic.

Network position information may include the positions of nodes in a network, also referred to as nodes' locations in the network or physical locations of nodes. Network position information for nodes may be determined using landmark distance vectors or other techniques. For example landmark clustering may be used for determining distance vectors. For landmark clustering, a node's location in a network is estimated by determining the node's distances to a common set of landmark nodes in the network. These distances form the landmark distance vector of the node. Landmark clustering assumes that if two nodes have similar distances (e.g., measured latencies) to the landmark nodes, the two nodes are likely to be close to each other. Also, landmark clustering using global and local landmark nodes may be used to determine network position information, such as described in U.S. Patent Application Serial Number 10/767,285, entitled, "Selecting Nodes Close To Another Node In A Network Using Location Information For The Nodes", by Zhichen Xu et al.

Network position information may also be determined using known landmark order vector techniques and geometric coordinate techniques. The landmark order vectors use the same information as the landmark distance vectors, but the network position information may include a vector of landmark nodes ordered by increasing latency. Geometric coordinate techniques, such as those used by GNP and Vivaldi, embed the nodes in a Euclidean geometric space which allows latencies between two nodes to be predicted fairly accurately by computing the Euclidean distance in that space. The network position information may then be represented in terms of the predicted latencies or the Euclidian distances.

Network distance between two nodes may be measured using one or more network attributes. In one example, latency is measured between nodes and used as a distance. Other network attributes that may be used for measuring network distance include but are not limited to bandwidth and number of hops. The same network attribute or attributes used to determine network position information may be used to determine network distances.

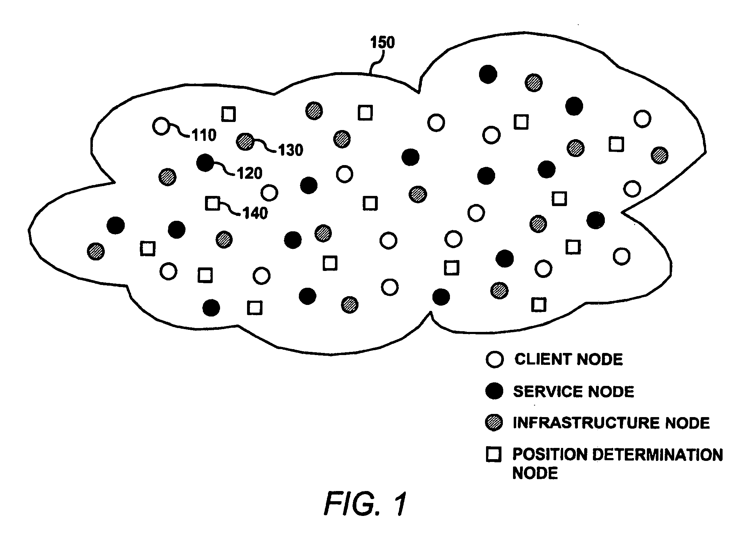

Figure 1 illustrates a system 100 including nodes and a network 150, according to an embodiment. The nodes in the network 150 include client nodes 110, service nodes 120, infrastructure nodes 130 that store network position information, and special infrastructure nodes that aid in computing a node's position called position determination nodes 140 (e.g., landmark nodes). These nodes are examples of nodes that may be used in the network 150, and the network 150 is not limited to using all of these types of nodes. The client nodes 110 may include end-user devices used by a user to query information from the infrastructure nodes 130. The client nodes 110 are not limited to end-user devices, and may include servers or other types of computer systems.

The service nodes 120 are nodes that provide a service to other nodes. A service, for example, may include a function that operates on an input and produces an output. Examples of services include transcoding, encryption, image repair and analysis, error correction, searching services (e.g., search engines), email, language translation, and others. In a broader sense, a service may also include transmitting data. For example, a web site that provides a news service and transmits news content to users may be considered a service.

The infrastructure nodes 130 store network position information for the nodes in the network 150. The number of infrastructure nodes 130 is generally much smaller than the total number of nodes in the network 150. The number of infrastructure nodes 130 used in the network 150 may depend on multiple factors, such as the desired latencies or load-balancing. To minimize network traffic and provide load balancing, a greater number of infrastructure nodes may be concentrated at or near network positions having a greater concentration of service nodes and/or client nodes. Also, an infrastructure node may be a stable node in the network 150. For example, an infrastructure node may have certain attributes, such as minimal downtime, data storage redundancy, not transient like a wireless node, etc., that make it stable.

Each of the infrastructure nodes 130 stores network position information for nodes closest to itself. Thus, the network position information for the nodes is distributed among the infrastructure nodes 130 based on network distances. In addition to network position information, node profiles may be stored in the infrastructure nodes 130. Node profiles may include but are not limited to network position information, service information, and IP address. The service information for service nodes may include the service or services provided by a service node and QoS characteristics which may be related to latency, bandwidth, etc. for providing the service. The QoS characteristics may be useful if a user requesting a service needs a service provided with a predetermined level of QoS.

A distributed database may be generated and maintained by the infrastructure nodes 130 for storing the node profiles including the network position information. A client node may send a query to the closest infrastructure node to identify a service node providing a desired service that is closest to the client node. Any type of node in the network 150 may use the distributed database to identify information about other nodes in the network 150, which may include information about certain nodes closest to the node generating the query.

In addition to storing node profiles, the distributed database stores information about the infrastructure nodes, including network position information for infrastructure nodes. In one embodiment, each infrastructure node stores network position information and/or other location information (e.g., IP address) for at least one other infrastructure node in the network 150 such that network position information for a node in the network 150 or a query can be routed to a closest infrastructure node. In one example, each infrastructure node stores network position information for at least one other closest infrastructure node (e.g., based on network distance) such that network position information or a query can be routed to a closest node. In another example, each infrastructure node stores network position information and/or other location information (e.g., IP address) for all the other infrastructure nodes in the network. Thus, if a search needs to be expanded, the next closest infrastructure node may be easily identified.

The position determination nodes 140 provide a position determination service for determining network position information for nodes. For example, an infrastructure node, a service node, or a client node determines its network position information before the network position information can be stored in the appropriate infrastructure node. These nodes use the position determination nodes 140 to determine their network position information. For example, if landmark clustering is used, the position determination nodes 140 may include local landmark nodes and possibly global landmark nodes. A node measures distances to landmark nodes in proximity to the node to determine the network position information of the node. The position determination nodes 140 may also be used to determine network position information for nodes using known landmark order vector techniques and known geometric coordinate techniques.

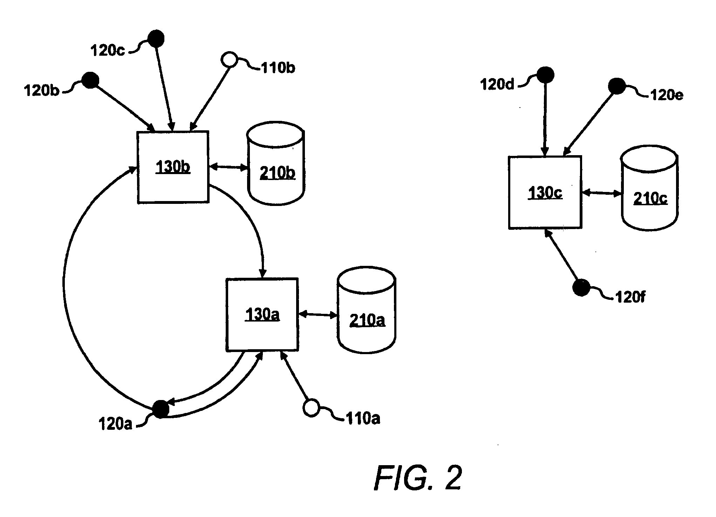

Figure 2 illustrates an example of storing network position information in the network 150, according to an embodiment. Infrastructure nodes 130a-c are shown. The infrastructure nodes 130 may store node profiles including network position information in a distributed database. Portions of the distributed database 210a-c are shown at the infrastructure nodes 130a-c.

The infrastructure nodes 130 store network position information for nodes closest to a respective infrastructure node. For example, the service node 120a determines its network position information using the position determination nodes 140 shown in figure 1. The service node 120a then transmits its network position information to an infrastructure node and the network position information is stored in the infrastructure node closest to the service node 120a. A closest infrastructure node to a particular node is the root of that node. When a node is storing its network position information in the distributed database for the first time, it may be assumed that the node knows of at least one infrastructure node. For example, the service node 120a is storing its network position information in the distributed database for the first time, and the service node 120a knows the IP address of the infrastructure node 130b. The service node 120a transmits its network position information to the infrastructure node 130b. The infrastructure node 130b stores the network position information for other infrastructure nodes as well its own network position information in the portion of the distributed database 210b. The infrastructure node 130b determines which infrastructure node is the closest to the service node 120b using the stored network position information of the infrastructure nodes. The infrastructure 130b determines that the infrastructure node 130a is closest to the service node 120a. The infrastructure node 130b transmits the network position information for the service node 120a to the infrastructure node 130a, and the network position information for the service node 120a is stored at the portion of the distributed database 210a. The infrastructure node 130a may transmit an acknowledgement to the service node 120a indicating that the infrastructure node 130a is the closest infrastructure node to the service node 120a. The service node 120a may transmit future service updates to infrastructure node 130a, which may include information stored in the portion of the distributed database 210a. Service updates may include network position information, an identification of service(s) provided by the service node 120a, information about the service(s), such as QoS characteristics, and the like. Other service nodes 120b-f are also shown in figure 2 transmitting network position information and service updates to the closest infrastructure node which stores the network position information and service information in the distributed database.

Network position information for client nodes may also be stored in the distributed database. For example, the network position information for the client nodes 110a and 110b is stored at the infrastructure nodes 130a and 130b respectively which are closest to the client nodes 110a and 110b respectively.

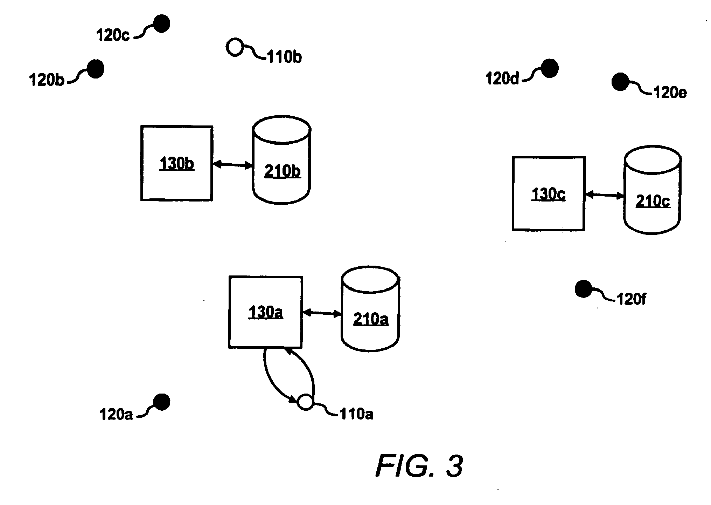

Figure 3 illustrates an example of conducting a search in the distributed database. For example, the client node 110a desires a language translation service. The client node 110a queries the distributed database to find the closest node operable to provide the desired language translation service. For example, the client node 110a previously received an acknowledgement that the infrastructure node 130a is the closest infrastructure node to the client node 110a. The client node 110a transmits the query to the infrastructure node 130a. The infrastructure node 130a runs the query on the portion of the distributed database 210a and returns the search results to the client node 110a. The search results may identify that the service node 120a is the closest service node to the client node 110a providing the desired language translation service, and the client node 110a receives the language translation service from the service node 120a. Because the portion of the distributed database 210a stores information about nodes in close proximity to the infrastructure node 130a, any service nodes identified from the portion of the distributed database 210a are likely to be close to the client node 110a. Thus, any latency for providing the desired language translation service from the service node 120a to the client node 110a should be minimal.

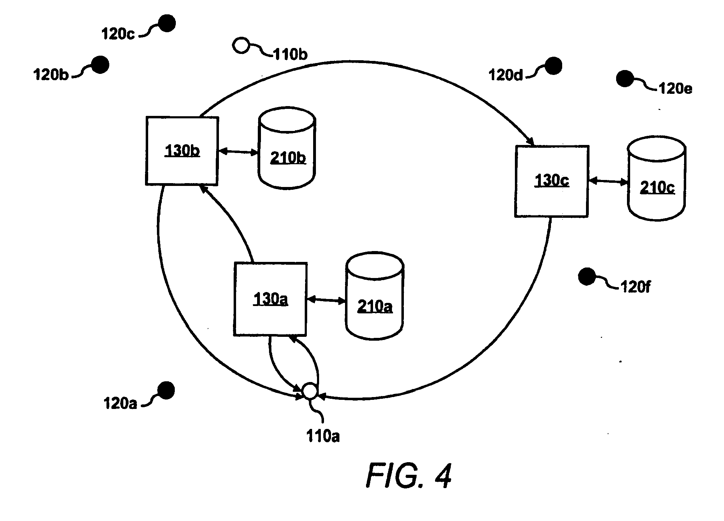

Figure 4 illustrates expanding the search shown in figure 3 to other infrastructure nodes. For example, assume the infrastructure node 130a was not able to identify any service nodes from its portion of the distributed database 210a that are operable to provide the desired language translation service or that the client node 110a wants a list of a plurality of service nodes operable to provide the desired language translation service. The search for the service node operable to provide the desired language translation service may be expanded to other infrastructure nodes, such as the infrastructure nodes 130b and 130c.

The infrastructure node 130a searches the portion of the distributed database 210a to identify one or more next closest infrastructure nodes to the client node 110a, such as the infrastructure nodes 130b and 130b. The first contacted infrastructure node, which is the infrastructure node 130a, may sort the other infrastructure nodes in order of network distance to the client node 110a and provide this sorted list of infrastructure nodes with the query when expanding the search. In certain instances, a set of next closest infrastructure nodes is equidistant or substantially equidistant to an infrastructure node expanding the search to a next closest infrastructure node. In those instances, the query is transmitted to one or all of the infrastructure nodes in the set and executed on one or all of the infrastructure nodes in the set before the search is expanded.

The infrastructure node 130a transmits the query to the infrastructure node 130b. The infrastructure node 130b runs the query on the portion of the distributed database 210b, and transmits search results to the client node 110a. The infrastructure node 130b identifies the next closest infrastructure node to the client node 110a, which is the infrastructure node 130c. The infrastructure node 130b transmits the query to the infrastructure node 130c, and the infrastructure node 130c runs the query on its local portion of the distributed database 210c. The infrastructure node 130c transmits the search results to the client node 110a.

The client node 110a receives search results from the infrastructure nodes 130a-c, which may include partial or complete node profiles for one or more service nodes operable to provide the desired language translation service. The client node 110a may select one of the service nodes to provide the service. When initially generating and transmitting the query, the client node 110a may specify the number of infrastructure nodes "N" to expand the search. In this example N=3. Alternatively, an infrastructure node may determine N. For example, the infrastructure node 130a cannot identify a service node operable to provide the desired language translation service from the portion of the distributed database 210a. Thus, the infrastructure node 130a sets N=2 and transmits the query to the closest infrastructure node 130b. The query is ultimately transmitted to one more infrastructure node, such as the infrastructure node 130c. Figures 3 and 4 illustrate a client node generating and transmitting a query to an infrastructure node. It will be apparent that other types of nodes, such as a service node or an infrastructure node, may also generate queries for the distributed database.

As shown in figure 2, the network position information for the nodes in the network 150, which may be included in node profiles, is distributed by storing network position information for a particular node at its root infrastructure node, whereby the root infrastructure node is the closest infrastructure node to that particular node. Closeness is in terms of network distances. Similarly, a query from a node is directed to its root infrastructure node, such as shown in figure 3, and possibly to other infrastructure nodes in close proximity, such as shown in figure 4. According to another embodiment, a distributed hash table (DHT) overlay network is used to store network position information. A DHT overlay network is a logical representation of an underlying physical network, which provide, among other types of functionality, data placement, information retrieval, routing, etc. In this embodiment, at least a portion of the network 150 may include a peer-to-peer network that is the underlying physical network for the DHT overlay network. Some examples of DHT overlay networks include content-addressable-network (CAN), PASTRY, and CHORD.

Data is represented in a DHT overlay network as a (key, value) pair, such as (K1,V1). K1 is deterministically mapped to a point P in the overlay network using a hash function, e.g., P = h(K1). The key value pair (K1,V1) is then stored at the point P in the DHT overlay network, which may include a DHT node owning a zone in the DHT overlay network where point P lies. The same hash function is used to retrieve data. The hash function is used to calculate the point P from K1. Then, the data is retrieved from the point P.

In this embodiment the infrastructure nodes 130 form a DHT overlay network. Network position information is used to identify a DHT node, which is an infrastructure node, for storing the network position information. For example, a service node hashes its network position information to identify a DHT node for storing the service node's network position information. The infrastructure node responsible for storing a node's network position information is the DHT root of the node.

A query for the closest node to a given node is also made by hashing the network position information of a node generating the query. The query is routed by the DHT overlay network to the root node of the node generating the query. Because the mapping between network position information and the DHT space preserves the distance information, i.e., nodes that are close in the network are likely to be close in the DHT overlay network as well, then the root node stores information about other nodes which are close to the node generating the query. The search may be expanded to other DHT nodes, such as neighbor nodes to the root node.

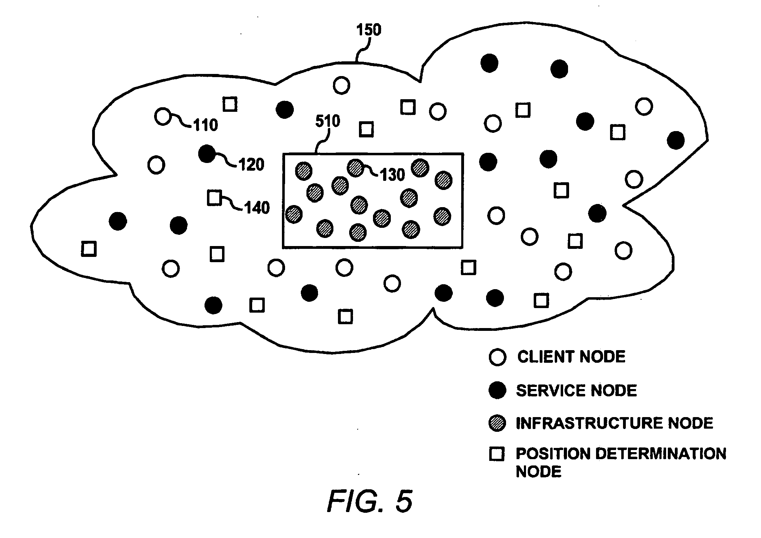

Figure 5 illustrates a DHT overlay network 510 in the network 150 comprised of the infrastructure nodes 130. The DHT overlay network 510 may be an N-dimensional DHT overlay network. Also, one of many types of DHT overlay networks may be used, such as CAN, CHORD, PASTRY, etc. Figure 5 shows the DHT overlay network 510 in the center of the network 150 only for purposes of representing a DHT overlay network in the network 150. The DHT nodes, which are the infrastructure nodes 130, are located throughout the network 150. As described above, the network position information for nodes is determined using the position determination nodes 140. The network position information is stored in a distributed database distributed among the DHT nodes. A DHT node for storing the network position of a particular node is determined by hashing network position information for the node.

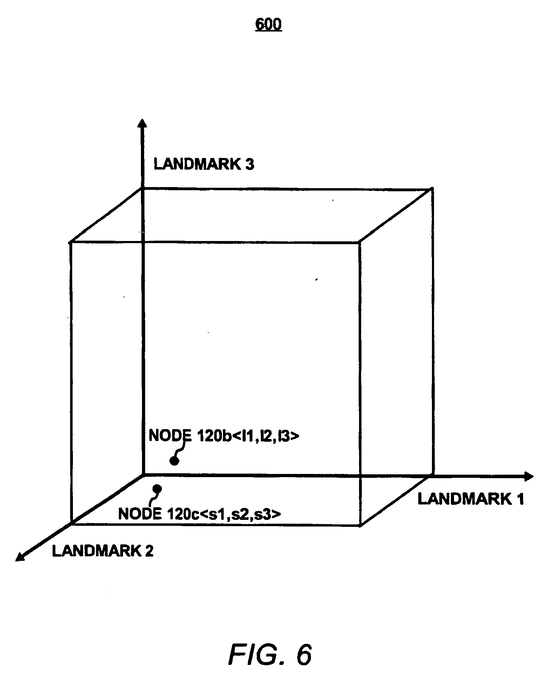

Figure 6 illustrates network position information for the service nodes 120b-c shown in figure 2. As shown in figure 2, the service nodes 120b-c are in close proximity. Using landmark clustering, the network position information of the service nodes 120b-c is represented using distances to three landmark nodes as an example. Figure 6 shows the network position information of the service nodes 120b-c in a 3-dimensional landmark space 600. The landmark space 600 is a logical representation of the network 150. The landmark vector for the service node 120b is <l1, l2, 13>. l1, l2, and l3 are network distances to three landmark nodes in the network 150, which are the position determination nodes in this example. The landmark vector for the service node 120c is <sl, s2, s3>, which includes distances to three landmark nodes.

The network position information for the service nodes 120b-c, which in this example includes the network distance vectors <l1, l2,l3> and <s1, s2,s3> is mapped to the DHT overlay network 510 by hashing the vectors, which are the keys in this example. Mapping includes identifying the DHT node to store the network position information for a node. In many instances, mapping requires mapping a point in a higher dimensional space to a lower dimensional space. For example, the DHT overlay network may include a 2-dimensional overlay network. Thus, the three-dimensional distance vectors for the service nodes 120b-c must be mapped to a lower-dimensional space, i.e., the 2-dimensional DHT overlay network 510.

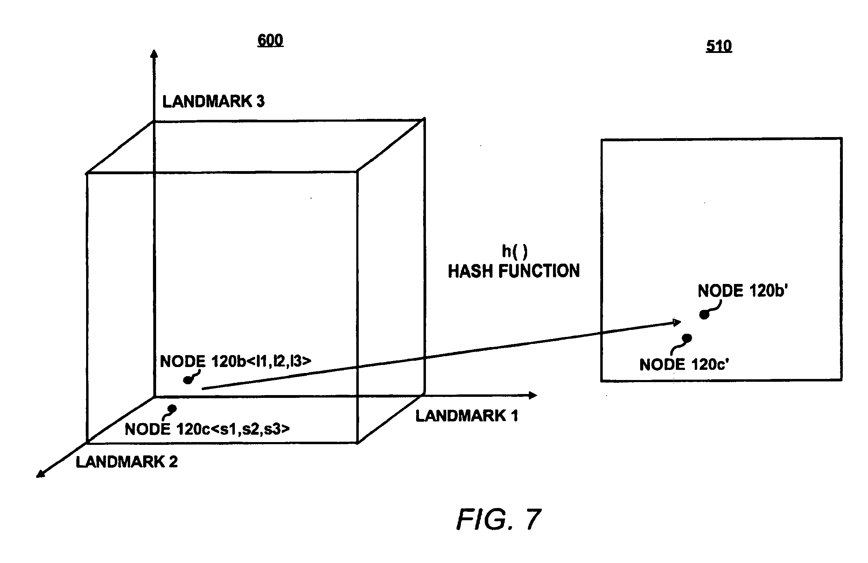

As shown in figure 7, a hash function is used to map points P1 and P2 representing network position information for the service nodes 120b-c in the higher dimension landmark space 600 to points P1' and P2' in the lower dimension overlay network 510. The hash function may use a space filling curve to map points from a higher dimension space into a lower dimension space. If two points are close to each other in the higher dimensional space, the points are mapped to two points close to each other in the lower dimensional space using the space filling curve. One example of well known recursive space-filling curve is the Hilbert curve, which may be used for the hash function.

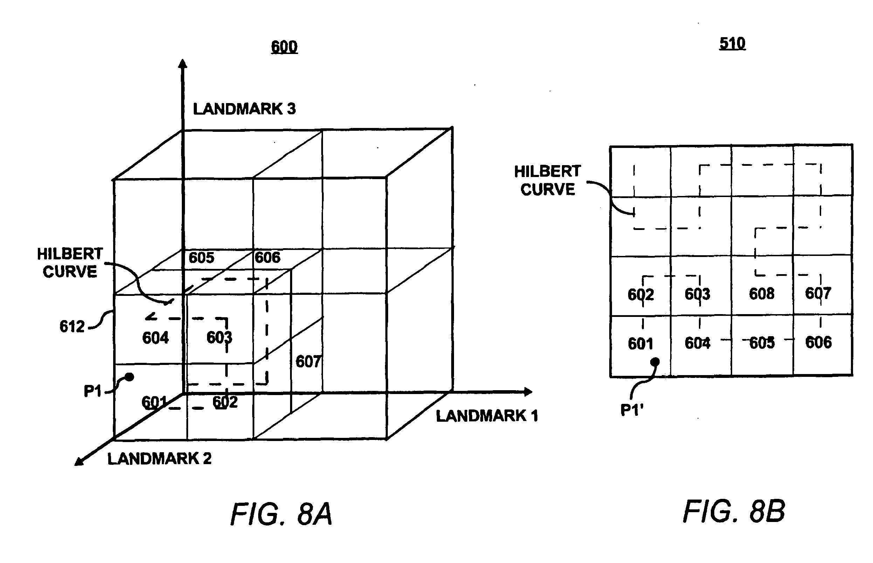

Figures 8A-B illustrate using a Hilbert space filling curve to map the point P1 in the three-dimensional landmark space 600 into the two-dimensional overlay network 510. Although not shown, the point P2 is similarly mapped. The landmark space 600 is divided into 2^{nx} grids of equal size (such as shown for section 612 of the landmark space 600), where n refers to the number of landmark nodes in the landmark space 600 and x controls the number of grids used to partition the landmark space 600. Each grid is assigned a landmark number (e.g., landmark numbers 601-608), and each node located in section 612, which includes the point P1 for the service node 120a, is numbered according to the grid into which it falls. Closeness in landmark number indicates closeness in the network. Also, the smaller the value of x, the larger the likelihood that two nodes will have the same landmark number.

A space filling curve, such as the Hilbert curve (although other known space filling curves may be used), is used to map the section 612 of the three-dimensional landmark space 600 to a region in the two-dimensional overlay network 510 shown in figure 8B. For CAN, the region is partitioned into grids, again using the Hilbert space filling curve. Figure 8B illustrates the landmark numbers 601-608 from the landmark space 600 mapped onto the grids in the overlay network 510. Network position information about a node is stored in a grid in the overlay network 510 depending on its landmark number. For example, the point P1 is shown for landmark number 601 in the landmark space 600 shown in figure 8A. P1 is mapped to point P1' in a section of the overlay network 510 also having the landmark number 601 based on the space filling curve. Network position information for the service node 120b may be stored at the DHT node in section 601. In the case of Chord, the landmark number may be used as a key to store the network position information for a node at a DHT node whose ID is equal to or greater than the landmark number. In the case of Pastry, a prefix of the node ID is used to partition the DHT space.

Figures 6, 7 and 8A-B provide an example of mapping distance vectors to a lower-dimensional DHT overlay network using Hilbert curves. Instead of distance vectors, such as the landmark vectors for the service nodes 120b-c, network position information may be represented using order vectors or using coordinates, such as determined using a known geometric coordinate technique (e.g., as used in GNP or Vivaldi).

Network position information represented using coordinates may be mapped to a lower-dimensional DHT overlay network also using Hilbert curves. Order vectors may use a different mapping strategy, as they are permutations of the landmark IDs, and not actual coordinates. Known recursive partitioning algorithms may be used for these mappings, such as "binning" algorithms.

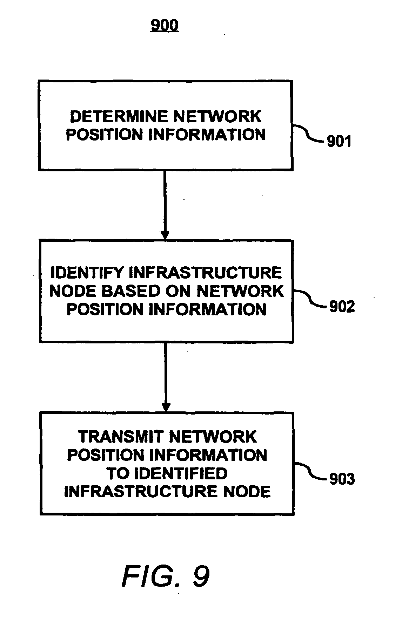

Figure 9 illustrates a flow chart of a method 900 for storing network position information for a node, according to an embodiment Figure 9 may be described with respect to one or more of the figures 1-8A-B by way of example and not limitation. At step 901, the service node 120a determines its network position information.

At step 902, the service node 120a identifies an infrastructure node for storing the network position information based on the network position information. For example, the service node 120a may identify an infrastructure node, such as the infrastructure node 130a, closest to the service node 120a for storing the network position information. That is the network distance between the service node 120a and the infrastructure node 130a is shortest when compared to the network distances to other infrastructure nodes from the service node 120a. In another example, the network position information for the service node 120a may be hashed to identify an infrastructure node for storing the network position information.

At step 903, the network position information is transmitted to the infrastructure node identified at step 902. The network position information is stored at a portion of the distributed database provided at the identified infrastructure node.

Network position information for other types of nodes, such as client nodes and infrastructure nodes, may also be determined. Network position information for client nodes and, in certain embodiments, infrastructure nodes is also stored in infrastructure nodes based on network distance. In particular, with regard to storing network position information for infrastructure nodes, each infrastructure node may store network position information and/or other location information (e.g., IP address) for at least one other infrastructure node in the network 150 such that network position information for a node in the network 150 or a query can be routed to a closest infrastructure node. For example, each infrastructure node stores network position information for at least one other closest infrastructure node (e.g., based on network distance) such that network position information or a query can be routed to a closest node. In another example, each infrastructure node stores network position information and/or other location information (e.g., IP address) for all the other infrastructure nodes in the network. Thus, if a search needs to be expanded, the next closest infrastructure node may be easily identified.

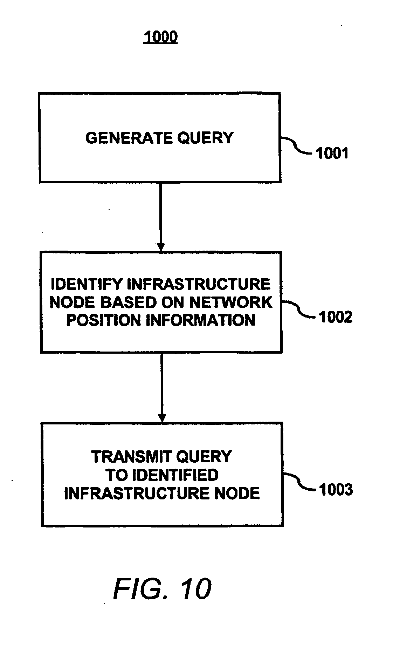

Figure 10 illustrates a flow chart of a method 1000 for running a query on a distributed database according to an embodiment. Figure 10 may be described with respect to one or more of the figures 1-8A-B by way of example and not limitation. At step 1001, the client node 110a generates a query. In one example, the query includes a query for a service node operable to provide a desired service. Other queries may also be executed.

At step 1002, the client node 110a identifies an infrastructure node based on the network position information for the client node 110a. This may include the closest network infrastructure node to the client node 110a, such as the infrastructure node 130a, based on network distances to infrastructure nodes. In another example, this may include hashing the network position information of the client node 110a to identify an infrastructure node.

At step 1003, the client node 110a transmits the query to the infrastructure node identified at step 1002. The query is run at the identified infrastructure node and possibly expanded to other infrastructure nodes in close proximity to the client node 110a.

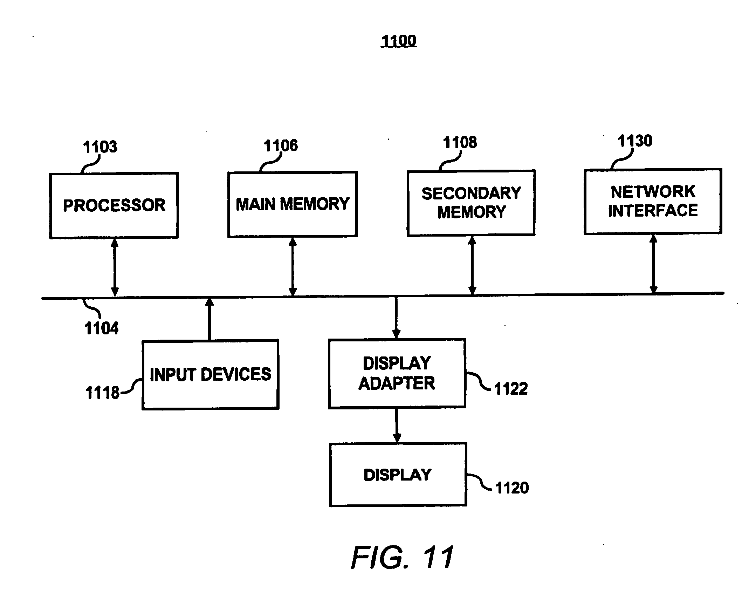

Figure 11 illustrates an exemplary block diagram of a computer system 1100 that may be used as a node in the network 150. The computer system 1100 includes one or more processors, such as processor 1103, providing an execution platform for executing software, such as classifiers and other modules. Commands and data from the processor 1103 are communicated over a communication bus 1104. The computer system 1100 also includes a main memory 1106, such as a Random Access Memory (RAM), where software may be resident during runtime, and a secondary memory 1108. The secondary memory 1108 includes, for example, a hard disk drive or other type of storage device. The secondary memory 1108 may also include ROM (read only memory), EPROM (erasable, programmable ROM), EEPROM (electrically erasable, programmable ROM).

The computer system 1100 may include user interfaces comprising one or more input devices 1118, such as a keyboard, a mouse, a stylus, and the like. The display adapter 1122 interfaces with the communication bus 1104 and the display 1120 and receives display data from the processor 1103 and converts the display data into display commands for the display 1120. The input devices 1118, the display 1120, and the display adapter 1122 are optional. A network interface 1130 is provided for communicating with other computer systems.

One or more of the steps of the methods 900 and 1000 may be implemented as software embedded on a computer readable medium, such as the memory 1106 and/or 1108, and executed on the computer system 1100, for example, by the processor 1103.

The steps may be embodied by a computer program, which may exist in a variety of forms both active and inactive. For example, they may exist as software program(s) comprised of program instructions in source code, object code, executable code or other formats for performing some of the steps. Any of the above may be embodied on a computer readable medium, which include storage devices and signals, in compressed or uncompressed form. Examples of suitable computer readable storage devices include conventional computer system RAM (random access memory), ROM (read only memory), EPROM (erasable, programmable ROM), EEPROM (electrically erasable, programmable ROM), and magnetic or optical disks or tapes. Examples of computer readable signals, whether modulated using a carrier or not, are signals that a computer system hosting or running the computer program may be configured to access, including signals downloaded through the Internet or other networks. Concrete examples of the foregoing include distribution of the programs on a CD ROM or via Internet download. In a sense, the Internet itself, as an abstract entity, is a computer readable medium. The same is true of computer networks in general. It is therefore to be understood that those functions enumerated below may be performed by any electronic device capable of executing the above-described functions.

While the embodiments have been described with reference to examples, those skilled in the art will be able to make various modifications to the described embodiments without departing from the scope. In particular, although the methods have been described by examples, steps of the methods may be performed in different orders than illustrated or simultaneously. Those skilled in the art will recognize that these and other variations are possible within the scope as defined in the following claims and their equivalents.

## Claims

1. A method of distributing the storing of network position information in a network (150), the method comprising:
determining network position information for service nodes (120) in a network (150), each of the service nodes (120) providing a service to other nodes (110; 120; 130; 140) in the network; and
storing the network position information for the service nodes (120) and service information of the services provided by the service nodes (120) in a distributed database (210) in the network (150),
wherein each of a plurality of infrastructure nodes (130) is provided with a portion of the distributed database (210), and
wherein storing the network position information and the service information in the distributed database (210) is based on network distances between the service nodes (120) in the network (150) and the plurality of infrastructure nodes (130), and further comprises:
for each of the service nodes (120), identifying a closest infrastructure node (130) to the service node (120) and transmitting the network position information and the service information for the service node (120) to the identified infrastructure node (130),
upon receiving a service query of a client node (110) by the closest infrastructure node (130), providing the client node (110) with information about the service node (120), which provides the requested service and is closest to the node (110) generating the service query.

2. The method of claim 1, wherein determining network position information for the service nodes (120) in the network (150) further comprises determining network position information for each of the plurality of infrastructure nodes (130).

3. The method of claim 2, further comprising:
storing the network position information for each of the plurality of infrastructure nodes (130) in all other infrastructure nodes (130) of the plurality of infrastructure nodes (130).

4. The method of claim 2, further comprising:
storing the network position information for each of the plurality of infrastructure nodes (130) in at least one other infrastructure node (130) such that network position information for a service node (120) in the network or a query is operable to be routed to a closest infrastructure node (130).

5. A system comprising:
a plurality of service nodes (120) for providing services to other nodes (110; 120; 130; 140) in the network,
a plurality of infrastructure nodes (130) for storing network position information and service information for the service nodes (120) closest to itself; and
a distributed database (210),
wherein each of the plurality of infrastructure nodes (130) is provided with a portion of the distributed database (210) and stores the network position information and service information for at least one of the plurality of service nodes (120) based on network distances between the service nodes (120) in the network (150) and the plurality of infrastructure nodes (130), and is operable, upon receiving a service query of a client node (110) by the closest infrastructure node (130), to provide the client node (110) with information about the service node (120), which provides the requested service and is closest to the node (110) generating the service query.

6. The system of claim 5, wherein the plurality of infrastructure nodes (130) comprise DHT nodes in a DHT overlay network (510) storing network position information for the plurality of service nodes (120).

## Patentansprüche

1. Verfahren zum Verteilen des Speicherns von Netzwerkposition-Informationen in einem Netzwerk (150), wobei das Verfahren umfasst:
Bestimmen von Netzwerkposition-Informationen für Dienstknoten (120) in einem Netzwerk (150), wobei jeder der Dienstknoten (120) einen Dienst an andere Knoten (110; 120; 130; 140) in dem Netzwerk bereitstellt; und
Speichern der Netzwerkposition-Informationen für die Dienstknoten (120) und Dienst-Informationen der Dienste, die von den Dienstknoten (120) in einer verteilten Datenbank (210) in dem Netzwerk (150) bereitgestellt werden,
wobei jeder einer Vielzahl von Infrastrukturknoten (130) mit einem Teil der verteilten Datenbank (210) versorgt ist, und
wobei ein Speichern der Netzwerkposition-Informationen und der Dienst-Informationen in der verteilten Datenbank (210) auf Netzwerkdistanzen zwischen den Dienstknoten (120) in dem Netzwerk (150) und der Vielzahl von Infrastrukturknoten (130) basiert, und weiter umfasst:
Identifizieren eines nächstgelegenen Infrastrukturknotens (130) für jeden der Dienstknoten (120) an den Dienstknoten (120) und Übertragen der Netzwerkposition-Informationen und der Dienst-Informationen für den Dienstknoten (120) an den identifizierten Infrastrukturknoten (130),
nachdem eine Dienstanfrage eines Clientknotens (110) von dem nächstgelegenen Infrastrukturknoten (130) empfangen wurde, Versorgen des Clientknotens (110) mit Informationen über den Dienstknoten (120), der den angefragten Dienst bereitstellt und dem Knoten (110), der die Dienstanfrage erzeugt, am nächsten ist.

2. Verfahren nach Anspruch 1, wobei ein Bestimmen von Netzwerkposition-Informationen für die Dienstknoten (120) in dem Netzwerk (150) weiter umfasst, dass Netzwerkposition-Informationen für jeden der Vielzahl von Infrastrukturknoten (130) bestimmt werden.

3. Verfahren nach Anspruch 2, weiter umfassend:
Speichern der Netzwerkposition-Informationen für jeden der Vielzahl von Infrastrukturknoten (130) in allen anderen Infrastrukturknoten (130) der Vielzahl von Infrastrukturknoten (130).

4. Verfahren nach Anspruch 2, weiter umfassend:
Speichern der Netzwerkposition-Informationen für jeden der Vielzahl von Infrastrukturknoten (130) in zumindest einem anderen Infrastrukturknoten (130), derart, dass Netzwerkposition-Informationen für einen Dienstknoten (120) in dem Netzwerk oder eine Anfrage funktionsbereit sind, um an einen nächsten Infrastrukturknoten (130) geroutet zu werden.

5. System, umfassend:
eine Vielzahl von Dienstknoten (120), um Dienste an andere Knoten (110; 120; 130; 140) in dem Netzwerk bereitzustellen,
eine Vielzahl von Infrastrukturknoten (130), um Netzwerkposition-Informationen und Dienst-Informationen für die ihm nächstgelegenen Dienstknoten (120) zu speichern; und
eine verteilte Datenbank (210),
wobei jeder der Vielzahl von Infrastrukturknoten (130) mit einem Teil der verteilten Datenbank (210) versorgt ist und die Netzwerkposition-Informationen und Dienst-Informationen für zumindest einen der Vielzahl von Dienstknoten (120) basierend auf Netzwerkdistanzen zwischen den Dienstknoten (120) in dem Netzwerk (150) und der Vielzahl von Infrastrukturknoten (130) speichert, und nach dem Empfangen einer Dienstanfrage eines Clientknotens (110) durch den nächstgelegenen Infrastrukturknoten (130) funktionsbereit ist, um den Clientknoten (110) mit Informationen über den Dienstknoten (120) zu versorgen, der den angefragten Dienst bereitstellt und dem Knoten (110), der die Dienstanfrage erzeugt, am nächsten ist.

6. System nach Anspruch 5, wobei die Vielzahl von Infrastrukturknoten (130) DHT-Knoten in einem DHT-Overlay-Netzwerk (510) umfasst, die Netzwerkposition-Informationen für die Vielzahl von Dienstknoten (120) speichern.

## Revendications

1. Procédé de répartition du stockage des informations de position de réseau dans un réseau (150), le procédé comprenant les étapes consistant à :
déterminer des informations de position de réseau pour des noeuds de service (120) dans un réseau (150), chacun des noeuds de service (120) fournissant un service aux autres noeuds (110 ; 120 ; 130 ; 140) dans le réseau ; et
stocker les informations de position de réseau pour les noeuds de service (120) et des informations de service des services offerts par les noeuds de service (120) dans une base de données distribuée (210) dans le réseau (150),
dans lequel chacun d'une pluralité de noeuds d'infrastructure (130) est pourvu d'une partie de la base de données distribuée (210), et
dans lequel le stockage des informations de position de réseau et des informations de service dans la base de données distribuée (210) est basé sur des distances sur le réseau entre les noeuds de service (120) dans le réseau (150) et la pluralité de noeuds d'infrastructure (130), et comprend, en outre :
pour chacun des noeuds de service (120), l'identification d'un noeud d'infrastructure le plus proche (130) du noeud de service (120) et la transmission des informations de position de réseau et des informations de service pour le noeud de service (120) au noeud d'infrastructure identifié (130),
lors de la réception d'une demande de service d'un noeud client (110) par le noeud d'infrastructure le plus proche (130), la fourniture au noeud client (110) d'informations concernant le noeud de service (120) qui fournit le service demandé et est le plus proche du noeud (110) générant la demande de service.

2. Procédé selon la revendication 1, dans lequel la détermination des informations de position de réseau pour les noeuds de service (120) dans le réseau (150) comprend, en outre, la détermination des informations de position de réseau pour chacun de la pluralité de noeuds d'infrastructure (130).

3. Procédé selon la revendication 2, comprenant, en outre, l'étape consistant à :
stocker les informations de position de réseau pour chacun de la pluralité de noeuds d'infrastructure (130) dans tous les autres noeuds d'infrastructure (130) de la pluralité de noeuds d'infrastructure (130).

4. Le procédé selon la revendication 2, comprenant, en outre, l'étape consistant à :
stocker les informations de position de réseau pour chacun de la pluralité de noeuds d'infrastructure (130) dans au moins un autre noeud d'infrastructure (130) de telle sorte que les informations de position de réseau pour un noeud de service (120) dans le réseau ou une demande soient destinées à être acheminées au noeud d'infrastructure le plus proche (130).

5. Système comprenant :
une pluralité de noeuds de service (120) pour fournir des services aux autres noeuds (110 ; 120 ; 130 ; 140) dans le réseau,
une pluralité de noeuds d'infrastructure (130) pour stocker des informations de position de réseau et des informations de service pour les noeuds de service (120) les plus proches de ceux-là ; et
une base de données distribuée (210),
dans lequel chacun de la pluralité de noeuds d'infrastructure (130) est pourvu d'une partie de la base de données distribuée (210) et stocke les informations de position de réseau et les informations de service pour au moins l'un de la pluralité de noeuds de service (120) sur la base des distances sur le réseau entre les noeuds de service (120) dans le réseau (150) et la pluralité de noeuds d'infrastructure (130), et est destiné, lors de la réception d'une demande de service d'un noeud client (110) par le noeud d'infrastructure le plus proche (130), à fournir au noeud client (110) des informations concernant le noeud de service (120) qui fournit le service demandé et est le plus proche du noeud (110) générant la demande de service.

6. Système selon la revendication 5, dans lequel la pluralité de noeuds d'infrastructure (130) comprend des noeuds DHT dans un réseau superposé DHT (510) stockant des informations de position de réseau pour la pluralité de noeuds de service (120).
